# EUROPEAN PATENT APPLICATION

(11) **EP 2 276 303 A1**
(43) Date of publication of application: **19.01.2011**
(21) Application number: 09738695.7
(22) Date of filing: 08.04.2009
(51) Int. Cl.: H04W 72/04, H04B 1/707, H04W 28/04, H04W 72/12, H04W 72/14

(54) **BASE STATION DEVICE, USER DEVICE AND METHOD FOR MOBILE COMMUNICATION SYSTEM**

(30) Priority: 02.05.2008 JP 2008120659
(71) Applicant: NTT DOCOMO, INC., Chiyoda-ku Tokyo 100-6150 (JP)
(72) Inventor: MIKI, Nobuhiko, Tokyo 100-6150 (JP); KISHIYAMA, Yoshihisa, Tokyo 100-6150 (JP); TANNO, Motohiro, Tokyo 100-6150 (JP); SAWAHASHI, Mamoru, Tokyo 100-6150 (JP)
(74) Representative: HOFFMANN EITLE
(86) International application number: PCT/JP2009/057214
(87) International publication number: WO 2009/133758

(57) **Abstract**

A downlink control channel transmitted from a base station apparatus includes multiple control channel elements (CCEs), and different PDCCH resources are determined depending on which CCEs are associated with control information destined for user equipments. If a PDSCH in a certain subframe is assigned to a user equipment in an old system, the control information destined for the user equipment is assigned to a certain CCE, and a PDSCH in a subframe after a predefined time period from the certain subframe is assigned to a user equipment in a new system, the control information destined for the user equipment may be associated with a CCE different from the certain CCE. Alternatively, the control information destined for the user equipment in the second system may be associated with the same CCE as the control information destined for the user equipment in the first system but may be spread with different spread codes.

## Description

### TECHNICAL FIELD

The present invention relates to the technical field of mobile communication and particularly relates to a mobile communication system, a base station apparatus, a user equipment and a method that utilize the next generation mobile communication technique.

### BACKGROUND ART

In this type of technical field, mobile communication schemes subsequent to so-called the third generation mobile communication scheme are being discussed by standardization group 3GPP of W-CDMA (Wideband-Code Division Multiple Access) scheme. Particularly, not only LTE (Long Term Evolution) but also further subsequent mobile communication schemes are being discussed as successors of the W-CDMA scheme, HSDPA (High Speed Downlink Packet Access) scheme, HSUPA (High Speed Uplink Packet Access) scheme and so on. As the successors of the LTE system, for example, LTE-Advanced or the fourth generation mobile communication systems are provided.

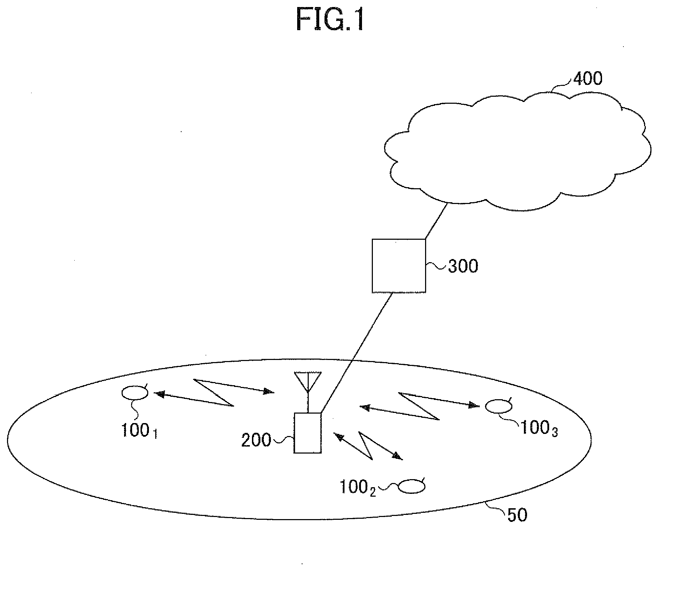

FIG. 1 is a conceptual view of a mobile communication system. The mobile communication system includes a cell 50, user equipments 100₁, 100₂, 100₃, a base station apparatus 200 communicating to the user equipments over the air, an upper node 300 connected to the base station apparatus 200 and a core network 400 connected to the upper node 300. The upper node 300 may be a radio network controller (RNC), an access gateway (aGW), a mobility management entity (MME) and so on.

The downlink radio access scheme in the LTE system is an OFDM (Orthogonal Frequency Division Multiplexing) scheme. On the other hand, a SC-FDMA (Single-Carrier Frequency Division Multiple Access) scheme is utilized for the uplinks. In other systems, however, other multi-carrier schemes may be utilized for the uplinks.

The OFDM scheme is a multi-carrier transmission scheme where a frequency band is segmented into multiple smaller frequency bands (subcarriers) and data is transmitted in the individual subcarriers. Dense and orthogonal arrangement of the subcarriers on the frequency axis can realize fast transmission and enhance frequency utilization efficiency.

The SC-FDMA scheme is a single-carrier transmission scheme where a frequency band is segmented for different terminals and different frequency bands are utilized in transmissions for the different terminals. Since the SC-FDMA scheme can reduce interference between the terminals easily and effectively as well as decrease variations of transmit power, it is preferable for the terminals from the viewpoint of saved power consumption, wider coverage and so on.

In the LTE system, communications are made by assigning one or more resources blocks (RBs) or resource units (RUs) to the user equipments in the uplinks as well as in downlinks. The resource blocks are shared among the many user equipments within the system. The base station apparatus determines which of the resource blocks are to be assigned to which of the multiple user equipments for each subframe of 1 ms in accordance with the LTE scheme. The subframe may be referred to as a transmission time interval (TTI). The determination to assign the radio resources is called scheduling. In downlinks, the base station apparatus transmits a shared data channel to a user equipment selected through the scheduling in one or more resource blocks. The shared data channel is referred to as a PDSCH (Physical Downlink Shared Channel). In uplinks, a user equipment selected through the scheduling transmits a shared channel to the base station apparatus in one or more resource blocks. The shared channel is referred to as a PUSCH (Physical Uplink Shared Channel).

In a communication system using the above-mentioned shared channels, it is necessary to signal (indicate) which user equipments are assigned the shared channels for each subframe in principle. A control channel used for the signaling is referred to as a PDCCH (Physical Downlink Control Channel) or a DL-L1/L2 control channel. In addition to the PDCCH, the downlink control signal may include a PCFICH (Physical Control Format Indicator Channel), a PHICH (Physical Hybrid ARQ Indicator Channel) and so on.

The PDCCH may include information pieces as follows:
- downlink scheduling grant;
- uplink scheduling grant;
- overlord indicator; and
- transmit power control command bit.

The downlink scheduling information may include information pieces on a downlink data channel and specifically may include downlink resource block assignment information, user equipment identification information (UE-ID), the number of streams, information on precoding vectors, a data size, a modulation scheme, HARQ (Hybrid Automatic Repeat reQuest) information and so on.

Also, the uplink scheduling grant my include information pieces on an uplink shared channel and specifically may include uplink resource assignment information, user equipment identification information (UE-ID), a data size, a modulation scheme, uplink transmit power information, demodulation reference signal information in uplink MIMO and so on.

The PCFICH is information for indicating a format of the PDCCH. More specifically, the number of OFDM symbols for mapping the PDCCH is indicated in the PCFICH. In the LTE, the number of OFDM symbols for mapping the PDCCH is equal to 1, 2 or 3, and the mapping is sequentially applied from the head of the OFDM symbols in a subframe.

The PHICH includes acknowledgement/non-acknowledgement information (ACK/NACK) for indicating whether to retransmit the PUSCH transmitted in uplinks. The PHICH indicates whether to retransmit the PUSCH for each transmission unit such as one packet and accordingly can be basically represented in one bit. Thus, without modification, the PHICH is not suitable for radio transmission. To this end, the PHICHs for several users are collected to generate multiple-bits information, which is multiple spread in a code multiplexing manner and transmitted over the air.

Although the terminologies may be defined in different manners, the PDCCH, the PCFICH and the PHICH may be defined as mutually independent and equal channels in the above-mentioned manner or may be defined as the PDCCH including the PCFICH and the PHICH.

In uplinks, user data (normal data signal) and its associated control information are transmitted in the PUSCH. Also, separately from the PUSCH, downlink channel quality indicator (CQI), acknowledgement information (ACK/NACK) to the PDSCH and so on are transmitted in a PUCCH (Physical Uplink Control Channel) . The CQI is used for scheduling operation and AMCS (Adaptive Modulation and Coding Scheme) operations for the physical downlink shared channel. In uplinks, random access channel (RACH), signals for indicating assignment requests for uplink and downlink radio resources and so on are transmitted.

### RELATED ART DOCUMENT

### [NON-PATENT DOCUMENT]

Non-patent document 1: 3GPP R1-070103, Downlink L1/L2 Control Signaling Channel Structure: Coding

### SUMMARY OF INVENTION

### [PROBLEM TO BE SOLVED BY THE INVENTION]

Since the above-mentioned mobile communication system includes a radio link, there arises a type of signal delay that cannot arise in a wired system. This signal delay may be called radio interface delay or air interface delay. In order to speed up communications, it goes without saying that the signal delay should be reduced as soon as possible.

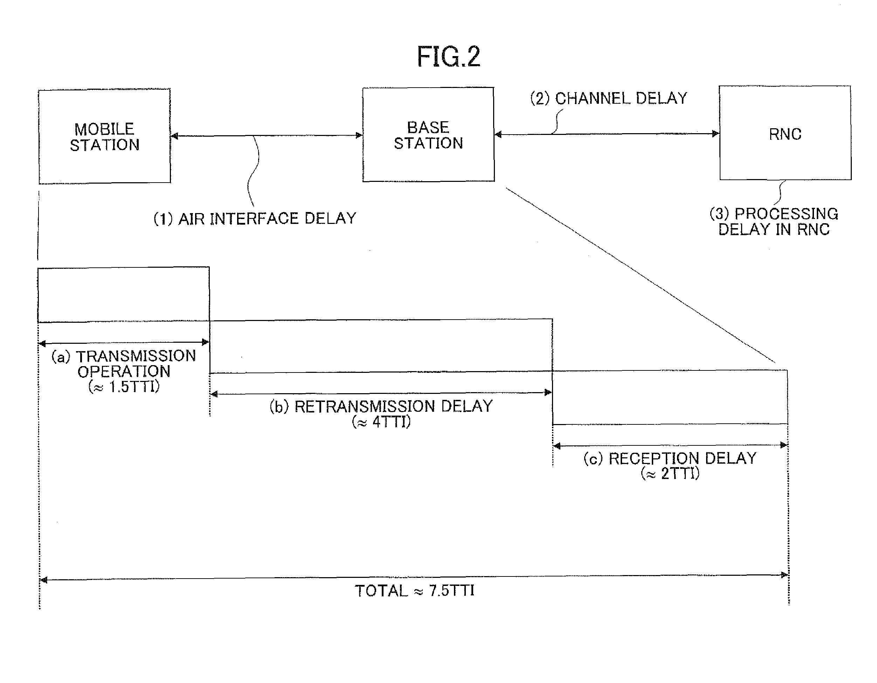

FIG. 2 illustrates details of the air interface delay. As illustrated in FIG. 2, although channel delay and processing delay in the RNC arise in addition to the air interface delay, the channel delay and the processing delay in the RNC can be significantly reduced and are ignored due to unimportance in the present application. In general, the air interface delay includes (a) transmission delay, (b) retransmission delay and (c) reception delay. The (a) transmission delay represents a time period required from initiation of transmission to completion of all transmission signals. For example, in transmission of data corresponding to 1 TTI, about 1.5 TTI period could be required in total in consideration of delay in transmission operations. The (b) retransmission delay represents delay required to conduct retransmission control (HARQ). It is assumed that if data transmitted in a certain TTI has to be retransmitted, the data is retransmitted after 8 TTIs. There are cases where the retransmission is needed or not depending on radio transmission situation. Assuming that the retransmission is required at the likelihood of 50%, there would arise an amount of delay corresponding to about 4 TTIs (=8 TTIs×1/2) in average. The (c) reception delay represents a time period required from reception of transmitted data to demodulation. If data corresponding to 1 TTI is received, for example, about 2 TTIs period would be required. As a result, the air interface delay can be estimated to be equal to about 7.5 TTIs in total. The retransmission delay occupies the largest fraction in the air interface delay, and accordingly if the retransmission delay can be reduced, faster radio access could be achieved.

Meanwhile, in the case where different types of systems such as new and old systems coexist in an identical area, it is highly important that the new system has adequate backward compatibility with the old system. Particularly, in the arrangement where the new and old systems conduct transmission and reception at the same frequency simultaneously (W-CDMA and HSDPA fall into the arrangement), the new system having the backward compatibility can be introduced rapidly. Otherwise, it would be hard to make the prompt transition from the old system to the new system.

One object of the present invention is to reduce the air interface delay in a new system while ensuring the backward compatibility with an old system particularly in the situation where the new system and the old system coexist at the same frequency.

### [MEANS FOR SOLVING THE PROBLEM]

In one aspect of the present invention, there is provided a base station apparatus for mobile communication wherein the base station apparatus is used in an area where at least a first system and a second system having different packet retransmission intervals coexist. The base station apparatus includes a scheduling unit configured to schedule radio resources for user equipments in the first system and the second system, a transmitting unit configured to transmit a downlink control channel and a downlink shared data channel and a receiving unit configured to receive an uplink control channel including acknowledgement information to the downlink shared data channel. The downlink control channel includes multiple control channel elements, and one or more of the control channel elements are associated with control information destined for the individual user equipments. Radio resources used by the user equipments receiving the downlink shared data channel to transmit the uplink control channels are determined depending on which of the control channel elements correspond to the control information destined for the user equipments.

If a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the control information destined for the user equipment in the second system may be associated with a control channel element different from the certain control channel element.

Alternatively, the radio resources for the uplink control channels may be provided for the first system and the second system separately.

Alternatively, the control information destined for the user equipment in the second system may be associated with the same control channel element as the control information destined for the user equipment in the first system but may be spread with different spread codes.

### [ADVANTAGE OF THE INVENTION]

According to the aspects of the present invention, it is possible to reduce the air interface delay in a new system while ensuring the backward compatibility with an old system particularly in the situation where the new system and the old system coexist at the same frequency.

### DRTEF DESCRIPTION OF DRAWING

FIG. 1 schematically illustrates a mobile communication system;
FIG. 2 illustrates details of the air interface delay;
FIG. 3 illustrates an exemplary subframe arrangement;
FIG. 4 schematically illustrates that PDCCHs and PDSCHs are mapped to a subframe;
FIG. 5 is a conceptual view for illustrating CCE;
FIG. 6 illustrates an exemplary PUCCH;
FIG. 7 schematically illustrates that necessity of retransmission is indicated in PUCCHs;
FIG. 8 schematically illustrates that channels having different RTDs are inappropriately multiplexed;
FIG. 9 schematically illustrates that channels having different RTDs are appropriately multiplexed;
FIG. 10 schematically illustrates that channels having different RTDs are appropriately multiplexed;
FIG. 11 schematically illustrates that separate PUCCH resources are provided to new and old systems;
FIG. 12 schematically illustrates that codes for code multiplexing are specified by sequence numbers and cyclic shift amounts;
FIG. 13 schematically illustrates that necessity of retransmission is indicated in PDCCH;
FIG. 14 schematically illustrates that PHICHs are individually transmitted;
FIG. 15 schematically illustrates that channels having different RTDs are multiplexed;
FIG. 16 illustrates a base station apparatus according to one embodiment of the present invention; and
FIG. 17 illustrates a user equipment according to one embodiment of the present invention.

### DETAILED DESCRIPTION OF EMBODIMENT

For convenience, although the present invention is described in aspects as set forth below, the separation into the aspects is not essential to the present invention, and two or more of the items may be combined as needed. Although the present invention is described using specific numeral instances in order to facilitate understandings of the present invention, unless specifically stated otherwise, these numeral instances are simply illustrative, and any other appropriate value may be used.
1. Downlink signal format;
2. Uplink signal format;
3. First exemplary operation;
4. Second exemplary operation;
5. Base station apparatus; and
6. User equipment.

### FIRST EMBODIMENT

### [1. Downlink signal format]

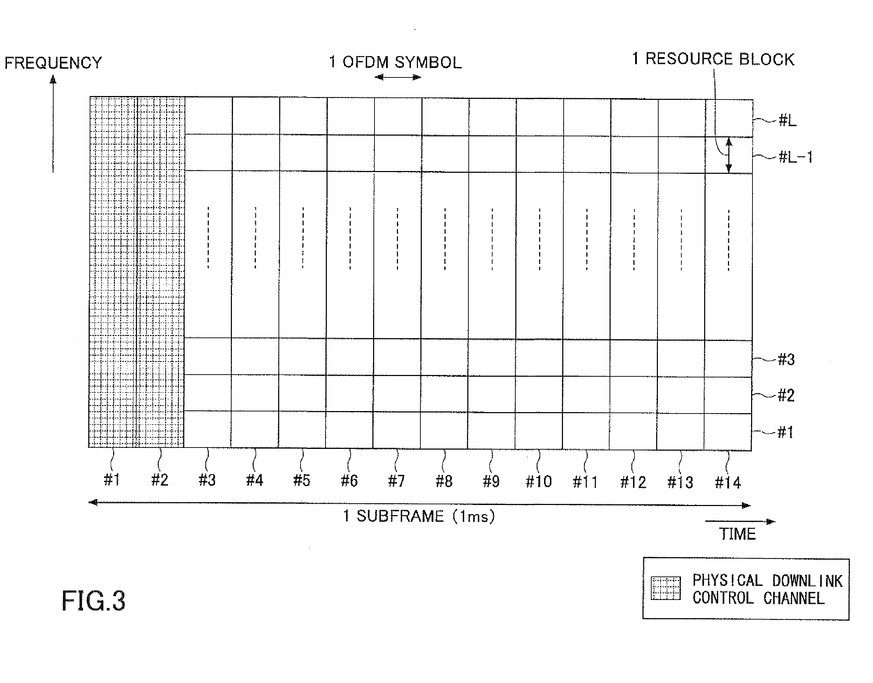

FIG. 3 illustrates an exemplary subframe arrangement. In downlink transmission, one subframe is of 0.5 ms or 1 ms, for example, and there are 14 OFDM symbols in the single subframe. In FIG. 3, numbers in the time axis direction (#1, #2, #3, ..., #14) indicate identification numbers for identifying the OFDM symbols, and numbers in the frequency axis direction (#1, #2, #3, ..., #L-1, #L where L is a positive integer) indicate identification numbers for identifying resource blocks.

The above-mentioned PDCCHs and so on are mapped to the first M OFDM symbols in the subframe. Any of three values 1, 2 and 3 is set to the M. In FIG. 3, the above-mentioned PDCCHs are mapped to the first two OFDM symbols in the subframe, that is, OFDM symbols #1 and #2 (in other words, M=2). Then, user data, a synchronization channel (SCH), a physical broadcast channel (BCH) and/or a persistent scheduling applied data channel and so on are mapped to OFDM symbols other than the OFDM symbols to which the above-mentioned PDCCHs are mapped.

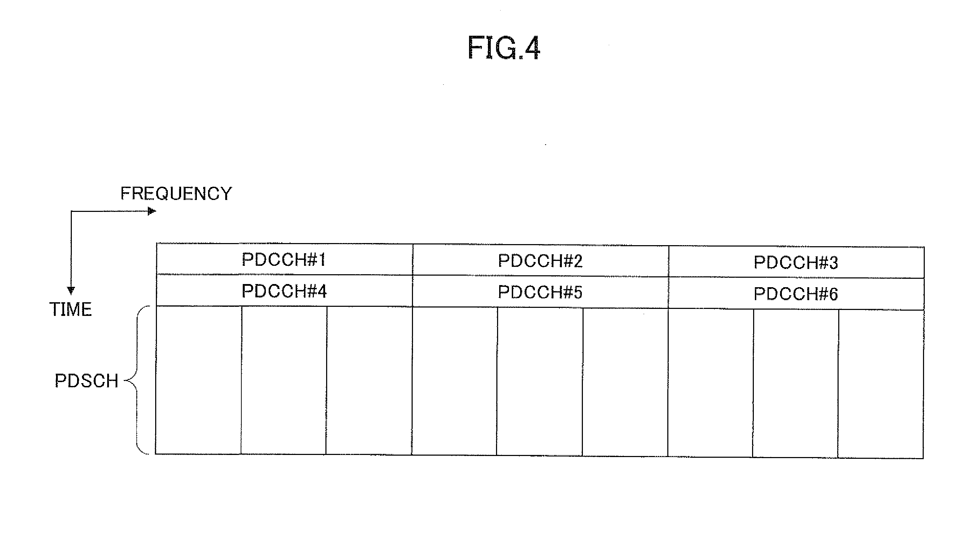

FIG. 4 schematically illustrates that 6 PDCCHs are mapped to the first two OFDM symbols. The above-mentioned user data may be IP packets for web browsing, file transfer (FTP), audio packets (VoIP) and so on and/or control signals for RRC (Radio Resource Control) operations. The user data is mapped to a transport channel DL-SCH and transmitted in the physical channel PDSCH.

In the example illustrated in FIG. 3, L resource blocks are provided in a system band. The frequency bandwidth per one resource block may be equal to 180 kHz, and there are 12 subcarriers in one resource block, for example. Also, the total number L of resource blocks may be set to 25 in the system bandwidth of 5 MHz, 50 in the system bandwidth of 10 MHz, 100 in the system bandwidth of 20 MHz, and so on. For convenience, a radio resource specified by a time period for occupying one OFDM symbol and a frequency for occupying one subcarrier is referred to as a resource element (RE).

Upon receiving a downlink signal, a user equipment separates a control signal from other signals in the subframe. First, the user equipment determines the value of the PCFICH to determine how many OFDM symbols in the subframe are assigned to the control signal. Then, the user equipment performs blind detection to determine presence of the control signal destined for the user equipment. In general, the blind detection is conducted for each combination of detection start position (certain resource element) and channel coding rate based on an error determination result using the identification information (UE-ID) of the user equipment.

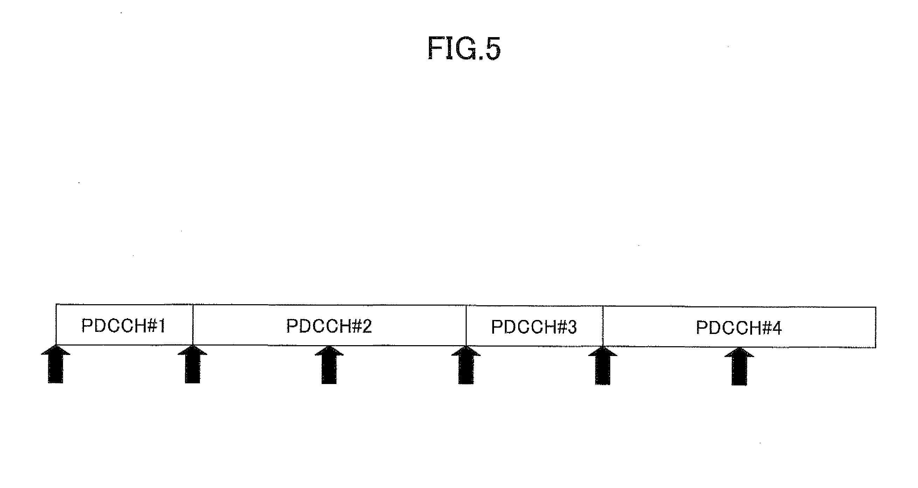

FIG. 5 schematically illustrates how PDCCHs having different channel coding rates are multiplexed to the same subframe. The longer PDCCHs are encoded at a lower channel coding rate. For example, PDCCH#2 is encoded at the channel coding rate R/2 lower than the channel coding rater for PDCCH#1. If there are many choices of detection start positions and channel coding rates, the blind detection would require excessively high computational complexity, resulting in overload on the user equipment. For this reason, the start position of the blind detection is limited to a certain position as illustrated in an up-pointing arrow. As a result, the number of choices with respect to the start positions can be decreased. For convenience, start position candidates of the blind detection are set for every predefined number of resource elements, and the predefined number of resource elements are referred to as a control channel element (CCE). The CCE corresponds to the mapping start position of control information. In FIG. 5, (start positions of) six control channel elements are indicated in the up-pointing arrows. The resource element is a resource unit specified by one subcarrier and one OFDM symbol.

### [2. Uplink signal format]

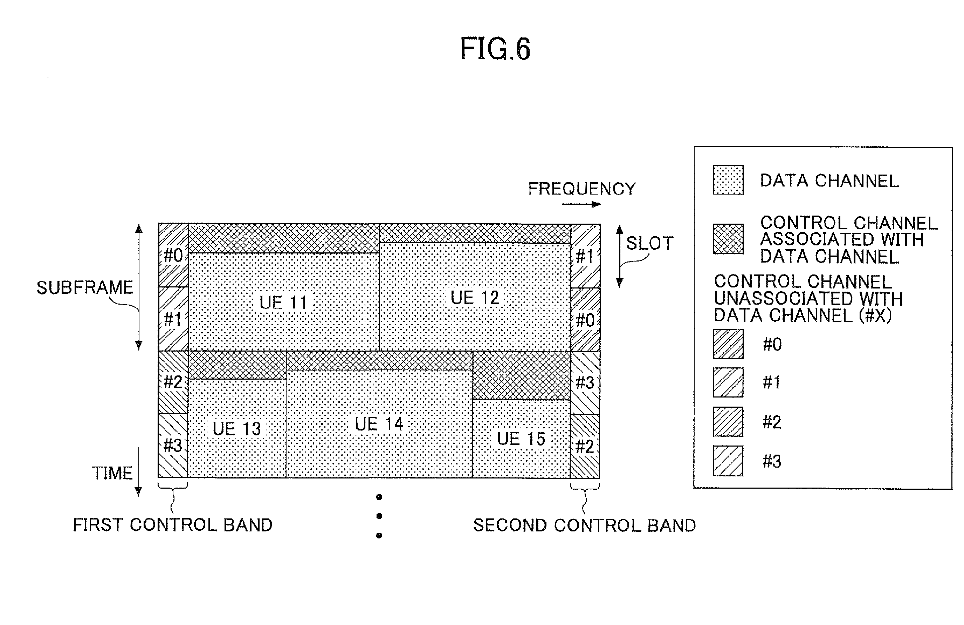

FIG. 6 illustrates an exemplary uplink signal format. In the illustrated example, the control information is transmitted in different transmission manners depending on whether resource blocks are assigned to transmit a data channel. If no resource block is assigned to transmit the data channel, L1/L2 control channels (#0, #1, #2, #3) transmitted by a user to a base station apparatus are transmitted in the first and second control bands while being subjected to frequency hopping. On the other hand, if a resource block is assigned to transmit the data channel, the control information is transmitted in that resource block. In this case, the control information and the data channel are multiplexed in accordance with a time division multiplexing scheme. In the illustrated case, resource blocks are assigned to user equipments UE11 through UE15 and are used to transmit the respective data channels and control information. Note that the first and second control bands are subjected to hopping as illustrated in order to gain frequency diversity effect. If a single-carrier scheme is applied to uplinks, the first and second control bands are not used by an identical user simultaneously. However, if a multi-carrier scheme is applied to the uplinks, the first and second control bands may be used by the same user simultaneously unlike the illustrated example.

### [3. First exemplary operation - downlink data transmission]

In the exemplary operation as described below, it is assumed that two systems including a new system and an old system having different retransmission periods are serving in the same area. One typical instance of the old system is an LTE based mobile communication system, but any other system may be utilized. One typical instance of the new system is an LTE-Advanced system, but any other system may be utilized. For convenience, the new and old systems are described, but this is not essential to the present invention. The present invention is applicable to the case where multiple systems having different retransmission periods or RTDs (Round Trip Delays) coexist.

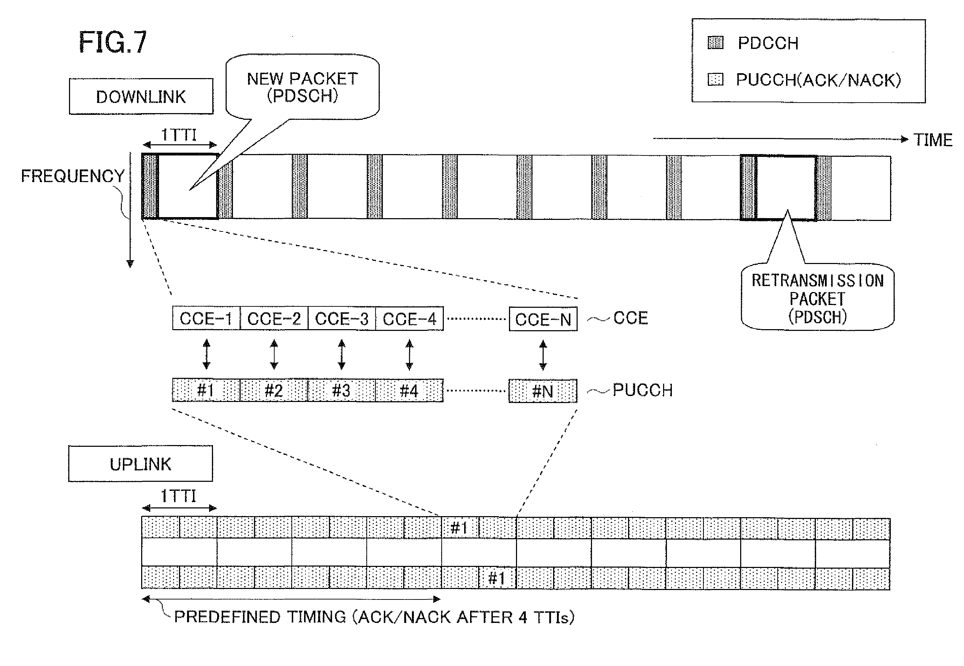

As illustrated in FIG. 7, a physical downlink shared data channel (PDSCH) is transmitted, and acknowledgement information (ACK/NACK) thereto is transmitted in a physical uplink control channel (PUCCH). If the acknowledgement information is NACK, the PDSCH is retransmitted. The PUCCH (ACK/NACK) is transmitted after 3 TTIs from reception of a new packet (after 4 TTIs from transmission initiation of the new packet). Although the PUCCH can be used to transmit CQI, the PUCCH according to the present embodiment is focused on the transmission of ACK/NACK. Although the transmission timing of the PUCCH is fixed in this manner, different values may be applied as described below. The base station apparatus determines whether the acknowledgement information is ACK or NACK and if the acknowledgement information is NACK, retransmits the packet after a predefined time period. For example, the retransmission of the packet may be initiated after 4 TTIs from reception of the PUCCH (ACK/NACK). In this case, a radio resource for ACK/NACK is determined as follows.

As stated above, the PDCCH includes control information corresponding to the number of multiplexed users, and the individual control information pieces are associated with one or more control channel elements (CCEs. In the illustrated example, the control information corresponding to N users is associated with N control channel elements (CCE-1, ..., CCE-N). For simplicity, it is assumed that control information corresponding to one user is associated with one CCE, but this is not essential. In general, the control information corresponding to one user is mapped to one or more CCEs. Furthermore, resources for the N PUCCHs are ensured in the one-to-one relationship between the N PUCCHs and the CCEs for the N users. In the illustrated example, the x-th control channel element (CCE-x) is associated with the x-th PUCCH resource (#x) in a one-to-one manner. As a result, if the PDSCH is received in accordance with downlink scheduling grant included in CCE-x, ACK/NACK to that PDSCH is transmitted in #x PUCCH. By receiving and demodulating #x PUCCH, the base station apparatus can determine whether a user destined for the downlink scheduling grant transmitted in CCE-x has successfully received the packet (ACK) or failed (NACK). In this manner, ACK/NACK can be appropriately transmitted without explicit signaling by maintaining the one-to-one relationship between CCE-x and #x.

### (There is no need of indicating in the PDCCH which PUCCH is to be used every time.)

In the first exemplary operation, the above operation is conducted not only in the new system but also in the old system. However, a retransmission packet is transmitted in the old system after 8 TTIs (4 TTIs + 4 TTIs) from initial transmission of the packet while the retransmission packet is transmitted in the new system after 6 TTIs (2 TTIs + 4 TTIs) from the initial transmission of the packet.

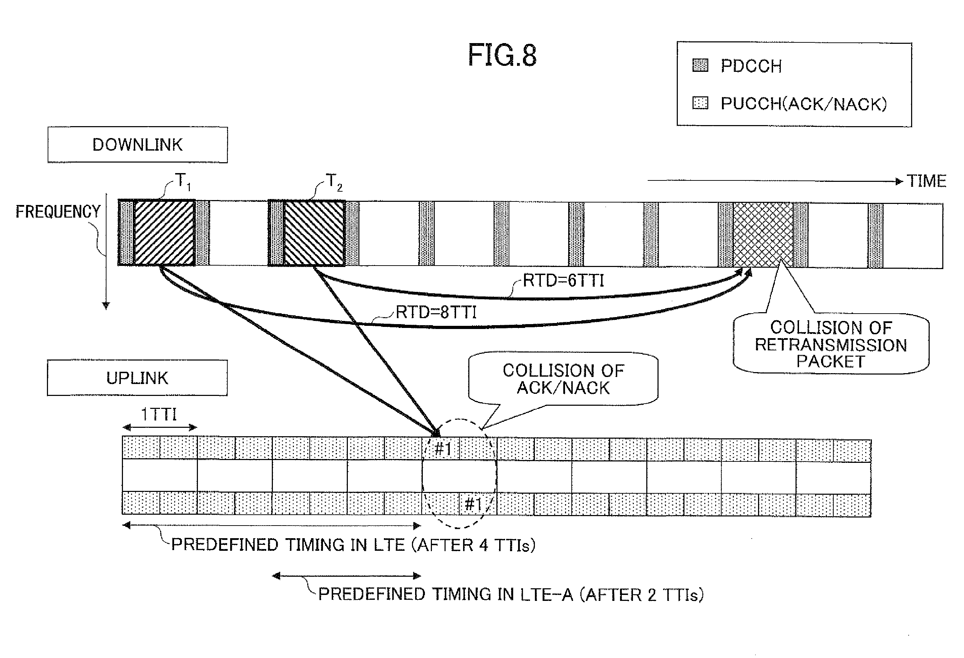

In this case, as illustrated in FIG. 8, collision is concerned from two standpoints. For example, it is assumed that the PDSCH is transmitted to a user in the old system over the subframe indicated by "T₁" and the associated downlink scheduling grant is mapped to CCE-1. Then, it is assumed that the PDSCH is transmitted to a user in the new system over the subframe indicated by "T₂" and the associated downlink scheduling grant is mapped to CCE-1. In the case where the mapping position for the control information is associated with the PUCCH radio resource number in a one-to-one manner as stated above, the user equipments in both the new system and the old system would transmit ACK/NACK in the same PUCCH (#1) . Also, there is a risk that transmission timing of the retransmission packet may coincide each other.

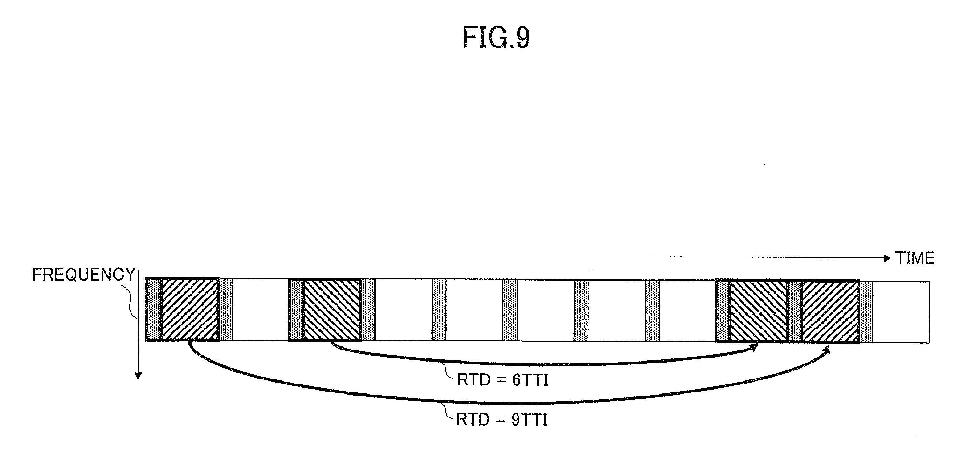

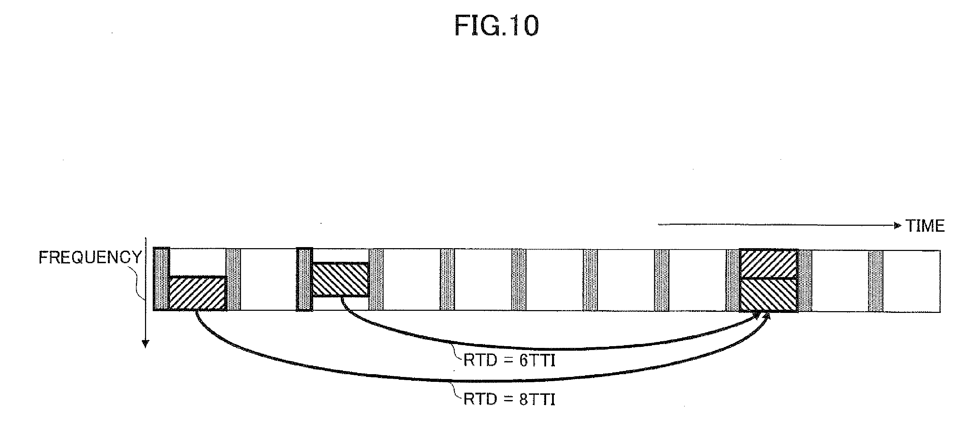

For the transmission timing of the retransmission packet, the RTD can be adjusted in the new and old systems to avoid the coincidence. In the example illustrated in FIG. 8, RTD = 8 TTIs in the old system and RTD = 6 TTIs in the new system. In this situation, as illustrated in FIG. 9, the collision can be avoided by increasing the RTD in the old system by one subframe. (It is assumed that the RTD may be changed in standard specification for the old system.) Alternatively, the RTD for the new system may be changed. Even in the case where the same transmission timing of retransmission packets is used in the new and old systems as illustrated in FIG. 10, if there are resources sufficient to use the frequency division multiplexing scheme, it is not necessary to change the RTD. In this manner, the collision of the retransmission packets can be easily avoided by adjusting the RTD period for the new and old systems relatively.

Next, collision of ACK/NACK is considered. For convenience, it is assumed that a mobile station in the old system transmits ACK/NACK to the base station after 4 TTIs from reception of the PDSCH while a mobile station in the new system transmits ACK/NACK to the base station after 2 TTIs from reception of the PDSCH. As stated above, the one-to-one relationship between the control information (PDCCH) and the mapping position (CCE#x) is established so that radio resources used to transmit ACK/NACK do not have to be signaled every time. For this reason, a different solution is needed to avoid the collision of ACK/NACK while using the same rules in the new and old systems. For example, three methods (1) to (3) as set forth below are considered.
(1) It is assumed that in the old system, the PDSCH in a certain subframe N is assigned to user equipment UE-A and the assignment information (control information) is mapped to CCE#1 in the PDCCH. On the other hand, it is assumed that in the new system, the PDSCH in another subframe N+2 is assigned to another user equipment UE-B and the assignment information (control information) is mapped to CCE#1 in the PDCCH. The PDSCHs destined for the user equipments are transmitted in separate subframes appropriately. However, the PUCCHs for transmitting ACK/NACK would collide with each other.

In the first method, a scheduler in a base station generates the PDCCH to avoid occurrence of the collision. Specifically, scheduling is first performed on the subframe N. Then, when the scheduling is performed on subframe N+2, it is taken into account that the control information for assigning the PDSCH to USE-A has been mapped to CCE#1 for the PDSCH in subframe N. As a result, the control information for UE-B is mapped to a control channel element different from CCE#1 for subframe N+2. In this manner, when the scheduler determines the assignment of radio resources to users in the new systems for a certain subframe, the scheduler takes into account the control information (PDCCH) for users in the old system in a preceding subframe.

Although the scheduling is basically performed based on condition of a certain subframe, additional information on a previous subframe is required to execute the above-mentioned operation. As a result, the computational complexity of the scheduling may slightly increase, but the collision of ACK/NACK can be avoided effectively.
(2) In the second method, different PUCCH resources are provided for the old system and the new system.

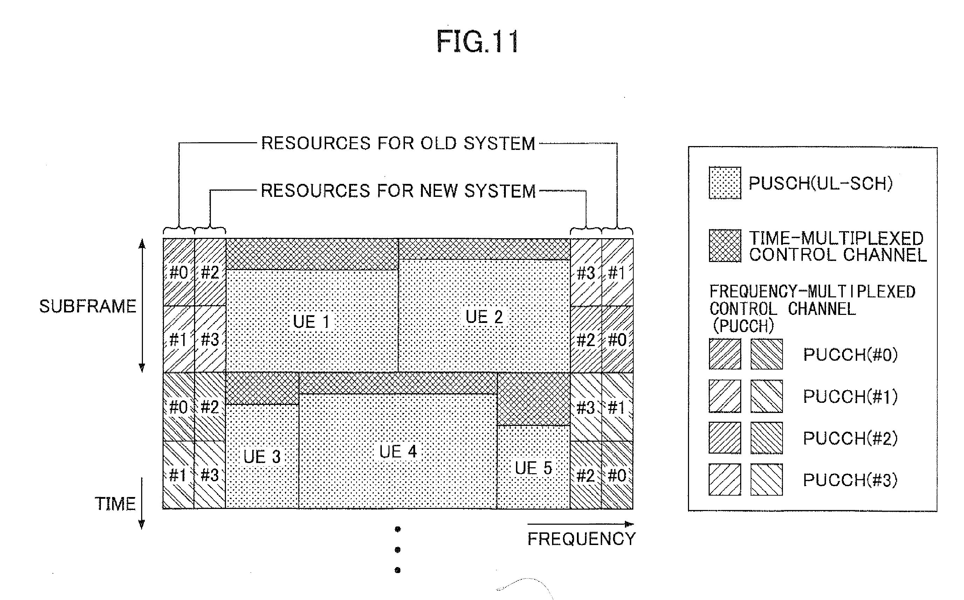

In the example illustrated in FIG. 11, PUCCH resources are provided at both ends of the system band. As one example, 25 resources blocks (RB1-RB25) are included in the system band of 5 MHz. The first and twenty-fifth resource blocks (RB1, RB25) are utilized exclusively for the PUCCH for the old system. The second and twenty-fourth resource blocks (RB2, RB24) are utilized exclusively for the PUCCH for the new system. In the illustrated example, "#0" and "#1" correspond to users in the old system, and "#2" and "#3" correspond to users in the new system.

In this manner, the collision of the PUCCH resources can be reliably avoided by reserving the PUCCH resources for the individual systems beforehand.
(3) According to the third method, insignificant computational complexity is involved in the scheduling, and it is also unnecessary to reserve different resources for the individual systems. In the third method, the collision is avoided by code-multiplexing the PUCCH. In other words, in the case where ACK/NACK is transmitted in the same slot and frequency as stated above, ACK/NACK from a mobile station in the old system and ACK/NACK from a mobile station in the new system are spread with different spread codes and are code-multiplexed. Any appropriate code may be used for distinction in the code multiplexing. As one example, such codes may be determined as follows.

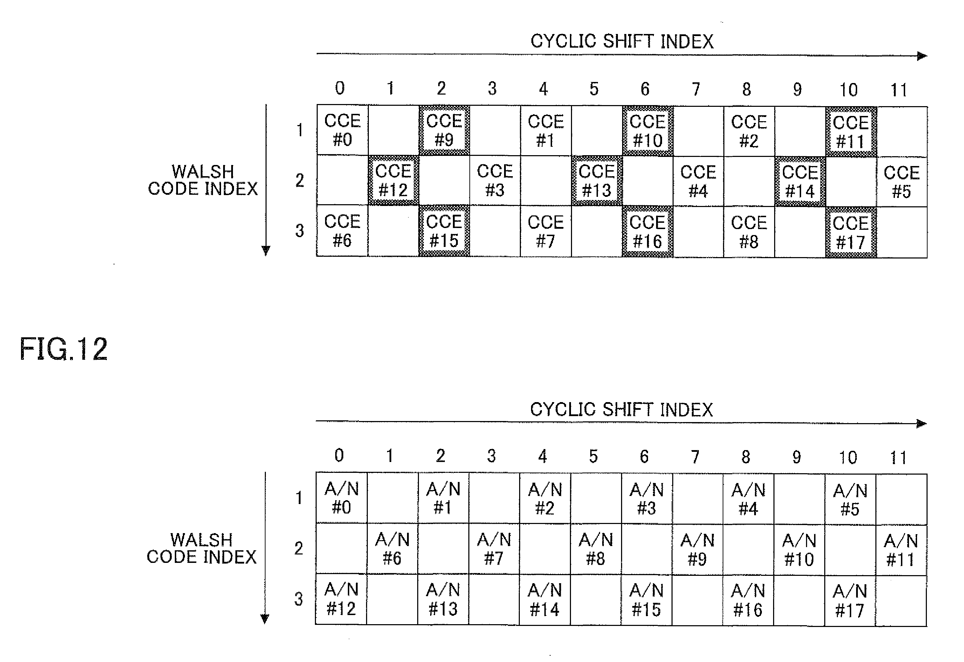

FIG. 12 illustrates which codes are utilized for mapping each of at most 18 ACK/NACK information pieces (A/N#x) to any of mapping positions (CCE#x) . The codes are specified in a Walsh code index and a cyclic shift index. It would be apparent that any other code sequence maybe utilized. In the illustrated example, three types of Walsh code sequences are provided, and six different codes are provided for each of the sequences by cyclically shifting the sequence. For example, a spread code corresponding to the cyclic shift amount of 2 for the first sequence is utilized for A/N#1 mapped to CCE#9. In this manner, it is possible to use fewer bits to indicate to a user equipment which code is to be utilized at what timing by combining the information for specifying the code sequence with the information for specifying the shift amount and associating the combination with a certain control channel element.

For example, it is assumed that the PDSCH in a certain subframe N is assigned to user equipment UE-A and that the assignment information (control information) is mapped to CCE#L in the PDCCH. On the other hand, it is assumed that the PDSCH in another subframe N+2 is assigned to user equipment UE-B and that the assignment information (control information) is mapped to CCE#1 in the PDCCH in the new system. In this case, both UE-A in the old system and UE-B in the new system are associated with a code corresponding to the shift amount of 4 for the first sequence. (This is because any of them is associated with CCE#1.) As a result, there could arise signal collision. For this reason, a different cyclic shift amount is indicated to the user in the new system in a certain shift bit (any amount other than 4). The user in the old system uses a code corresponding to the cyclic shift amount of 4 for the first sequence to generate the PUCCH in accordance with the above-mentioned rule. The user in the new system receives the shift bit from a base station to inform the user that any amount other than 4 (for example, 6) is to be used as the cyclic shift amount. As a result, the user in the new system would generate the PUCCH with the code corresponding to the cyclic shift amount of 6 for the first sequence. Subsequently, although the individual users transmit the PUCCHs at the same frequency, the PUCCHs can be appropriately transmitted due to code spreading with the different codes. The codes may be provided by numbers of the spread codes. Also, the codes may be provided by relative values to the current value.

In this manner, certain shift bits together with the relationship as illustrated in FIG. 12 can be indicated to the user in the new system, which can indicate the appropriate code with fewer bits.

### [4. Second exemplary operation - uplink data transmission]

Next, the case where the PUSCH is transmitted from a user equipment is described below.

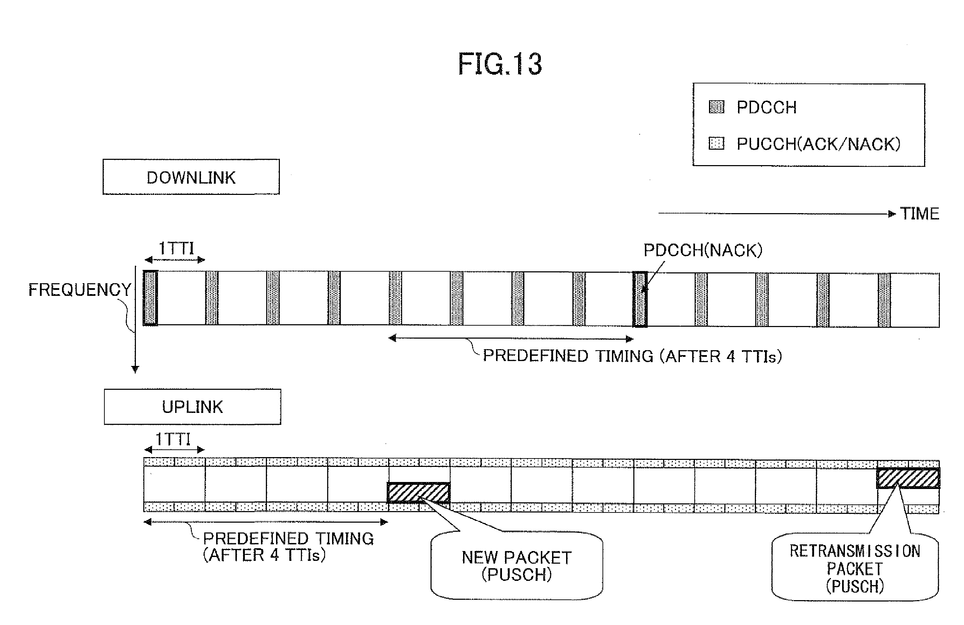

In the example illustrated in FIG. 13, a PDCCH including an uplink scheduling grant is transmitted from a base station apparatus, and after 4 TTIs from initiation of the transmission, a PUSCH is transmitted from a user equipment. In addition, after 4 TTIs from initiation of the transmission of the PUSCH, retransmission necessity is transmitted from the base station apparatus to the user equipment. The retransmission necessity is transmitted (a) together with the uplink scheduling grant (in the PDCCH) or (b) in a PHICH. FIG. 13 illustrates the former case, and the latter case is described below. The PHICH indicates the acknowledgement information (ACK/NACK) . In the system considered in the context of the present specification, the retransmission necessity may be transmitted in both the cases (a) and (b). Alternatively, the retransmission necessity may be transmitted only in the case (b) . If the retransmission necessity is transmitted in both the cases, higher priority is provided to the retransmission necessity transmitted in the PDCCH, and ACK/NACK indicated in the PHICH is ignored. Accordingly, it is in the case (b) that the PHICH can be utilized effectively.

The case (a) is considered below. In this case, the user equipment transmits a retransmission packet by using a resource specified in the PDCCH. Since the uplink scheduling grant has been transmitted, the retransmission packet would be transmitted by using the resource suitable for retransmission (the resource that is not necessarily equivalent to the resource used to transmit the packet initially). The retransmission packet can be appropriately transmitted from users in the new system as well as users in the old system in accordance with the PDCCH.

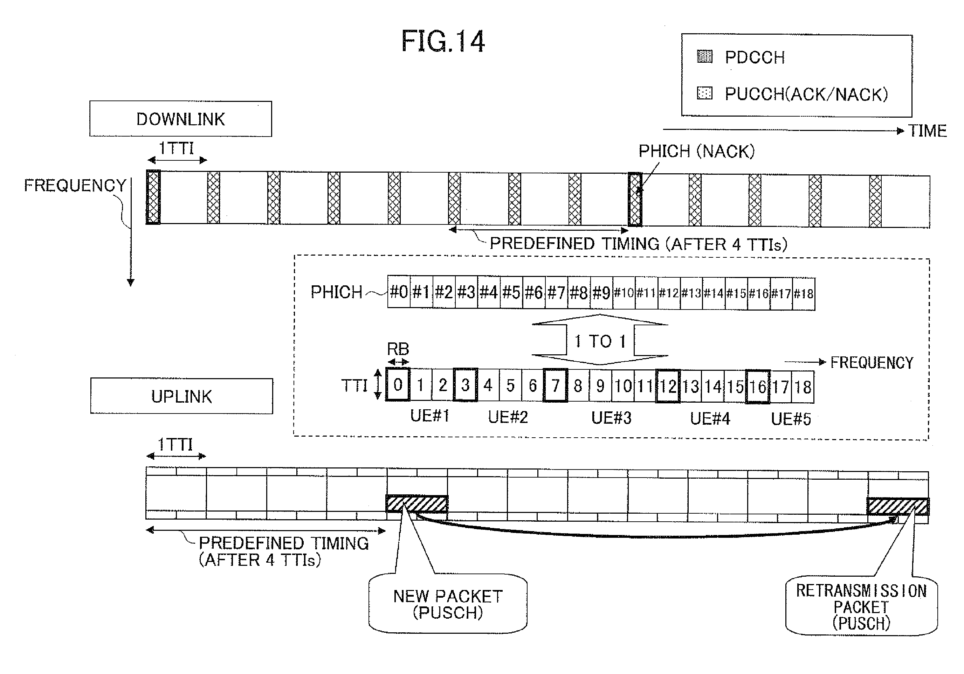

Referring to FIG. 14, the case (b) is considered below. In this case, the resource used for the PHICH cannot be determined due to lack of the PDCCH. The PHICH resource can be determined as follows.

First, the base station apparatus performs scheduling for uplinks. Uplink transmission is permitted to individual user equipments, and PDCCHs as illustrated in solid boxes in the upper-left portion are transmitted from the base station apparatus. The user equipment demodulates a downlink control signal. The user equipment determines whether the received PDCCH includes a PDCCH destined for itself. If the PDCCH destined for the user equipment is included, the user equipment prepares communication using the indicated resource block. In the illustrated example, radio resources are assigned for transmission of the PUSCH (new packet) in a manner as set forth below.

Three resource blocks RB0 through RB2 are assigned to user equipment UE-1.

Four resource blocks RB3 through RB6 are assigned to user equipment UE-2.

Five resource blocks RB7 through RB11 are assigned to user equipment UE-3.

Four resource blocks RB12 through RB15 are assigned to user equipment UE-4.

Three resource blocks RB16 through RB18 are assigned to user equipment UE-5.

In this manner, the PUSCHs are transmitted from the user equipments in the assigned resource blocks.

The base station apparatus receives the PUSCHs from the user equipments and determines whether retransmission is needed. The determination result is transmitted to the user equipments in the PHICH. If the retransmission is not needed, the acknowledgement information indicative of positive response (ACK) is provided. On the other hand, if the retransmission is needed, the acknowledgement information indicative of negative response (NACK) is provided. In the present example, since the five users UE-1 through UE-5 transmit the PUSCHs, the acknowledgment information for the five users is provided.

For the PHICH resources, only the total number of resource blocks is reserved, and 19 PHICH resources (PHICH-#0 through PHICH-#18) are provided in the example illustrated in FIG. 14. Among the 19 resources, the resource corresponding to the minimum number in the resource blocks assigned to each of the user equipments is used. Since the resource blocks starting from RB0 are assigned to UE-1, the acknowledgement information of UE-1 is written in PHICH-#0. Since the resource blocks starting from RB3 are assigned to UE-2, the acknowledgement information of UE-2 is written in PHICH-#3. Similarly, the acknowledgement information of UE-3 is written in PHICH-#7, the acknowledgement information of UE-4 is written in PHICH-12. and the acknowledgement information of UE-5 is written in PHICH-#16. PHICH-#1 through PHICH-#19 prepared in the above manner are transmitted to the user equipments.

The user equipments read the PHICHs associated with themselves from downlink control signals. The reading timing is after 4 TTIs from initiation of transmission of the new packets (PUSCHs) from the user equipments. The user equipments register resource blocks used to transmit the PUSCHs. In the case where the PUSCH has been transmitted in the x-th and subsequent resource blocks, the acknowledgement information of that user is written in the x-th PHICH (PHICH-x) . Accordingly, user equipment UE-1 reads PHICH-#0 to determine the retransmission necessity. User equipment UE-2 reads PHICH-#3 to determine the retransmission necessity. User equipment UE-3 reads PHICH-#7 to determine the retransmission necessity. User equipment UE-4 reads PHICH-#12 to determine the retransmission necessity. User equipment UE-5 reads PHICH-#16 to determine the retransmission necessity.

If the retransmission is not needed (ACK case) , the user equipment finishes transmission associated with the process number and makes ready to subsequent communication. On the other hand, if the retransmission is needed (NACK case), the user equipment transmits the retransmission packet after 8 TTIs from transmission initiation of the initial packet (after 4 TTIs from reception of PHICH-#x). Radio resources for the retransmission may be the same as those of the new packet or may be different from those of the new packet. In the latter case, it is predefined which different resources are to be used.

In this manner, the PHICH resources corresponding to the resource blocks used for the PUSCHs in a one-to-cane manner are provided, and thus the base station apparatus and the user equipments can transmit and receive the PHICHs appropriately without necessity of any signaling.

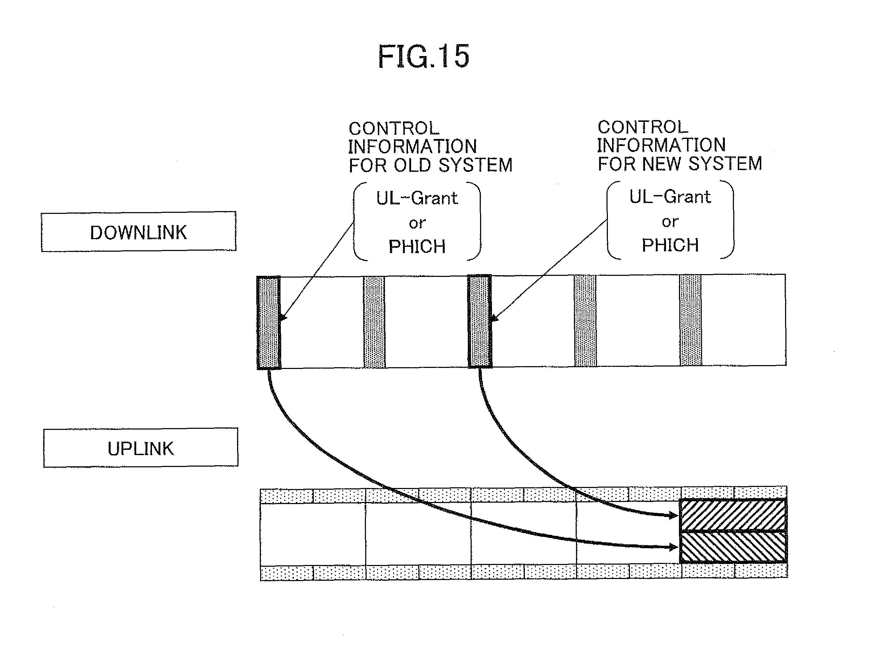

FIG. 15 illustrates operations of the coexisting old and new systems. As stated above, the retransmission necessity may be transmitted in a PDCCH. Alternatively, the retransmission necessity may be transmitted in a PHICH instead of the PDCCH. (In this context, the terminology "PDCCH" is not defined to include the PHICH.) In the old system, a retransmission packet is transmitted after 4 TTIs from reception of the PHICH as stated above (in NACH case). In the new system, a retransmission packet is transmitted after 2 TTIs from reception of the PHICH (NACK case) . In the illustrated example, not only a user in the old system but also a user in the new system transmit the retransmission packet in the same subframe. However, when a retransmission resource is reserved for the user in the old system, it cannot be determined whether the user in the new system subsequently conducts the retransmission. Accordingly, it is not easy to schedule all the PUSCHs for both the new and old systems appropriately without imposing any condition.

In this embodiment, as illustrated, different resources (bands) are provided for the old system and the new system. As a result, although efficient resource utilization may be slightly impaired, the PUSCH can be reliably transmitted without collision. First, the scheduler in the base station apparatus schedules resources in a certain subframe reserved for the old system. At a subsequent time point, the scheduler schedules resources in the certain subframe reserved for the new system. In this case, if some of the resources reserved for the old system are unused, the unused resources may be used for a user in the new system.

### [5. Base station apparatus]

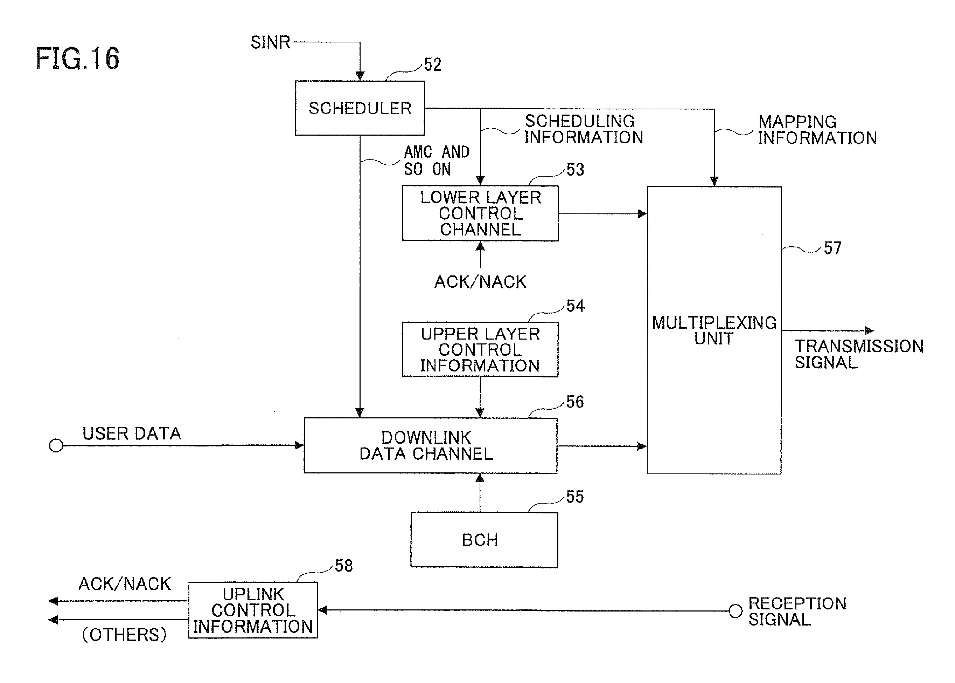

FIG. 16 illustrates a base station apparatus according to one embodiment of the present invention. In FIG. 5, a scheduler 52, a lower layer control channel generation unit 53, an upper layer control information generation unit 54, a broadcast information generation unit 55, a downlink data channel generation unit 56, a multiplexing unit 57 and an uplink control information extraction unit 58 are illustrated.

The scheduler 52 schedules radio resources. The scheduling may be carried out by using any appropriate algorithm existing in this technical field. As one example, the scheduling may be carried out in accordance with maximum C/I method or proportional fairness method. Downlink and/or uplink scheduling information is supplied to the lower layer control channel generation unit 53. Since the scheduling information indicates the relationship between transmitted information and frequencies and times, the relationship is supplied to the multiplexing unit 57 as mapping information. The scheduler 52 determines a data modulation scheme and a channel coding rate to be applied to a data channel and supplies the determined data modulation scheme and channel coding rate as AMC information to the downlink data channel generation unit 56. In the case where the above (1) in the first exemplary operation is applied, the scheduler 52 performs downlink scheduling so that ACK/NACK for users in the new and old systems cannot collide with each other.

The lower layer control channel generation unit 53 generates control information transmitted in a downlink L1/L2 control channel, for example, and performs predefined channel coding and data modulation on the control information to generate a lower layer control channel such as a L1/L2 control channel. In the case where the above (3) in the first exemplary operation is applied, shift bit information (information indicative of a cyclic shift amount) is also included in the lower layer control signal.

The upper layer control information generation unit 54 generates information such as L3 control information and supplies the information to the data downlink data channel generation unit 56.

The broadcast information generation unit 55 generates broadcast information (BCH) to be broadcast to user equipments within a cell and supplies the broadcast information to the downlink data channel generation unit 56.

Information for indicating that different PUCCH resources are provided for the old system and the new system and/or for indicating that different PUSCH resources are provided for the old system and the new system may be transmitted to the user equipments as upper layer control information or broadcast information.

The downlink data channel generation unit 56 receives user data, the upper layer control information and the broadcast information and generates a downlink data channel by performing data modulation and channel coding on a signal including the data and the information.

The multiplexing unit 57 multiplexes the lower layer control channel and the downlink data channel. The multiplexing is generally conducted in accordance with time division multiplexing and frequency division multiplexing manners.

The uplink control information extraction unit 58 extracts and restores uplink control information from the received uplink signals.

### [6. User equipment]

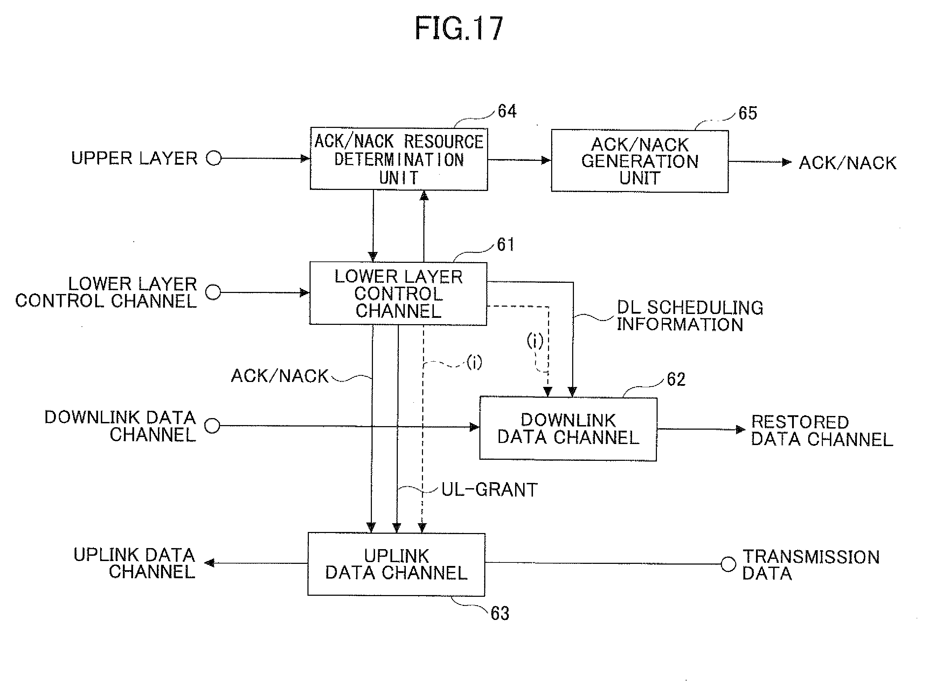

FIG. 17 illustrates a user equipment according to one embodiment of the present invention. In FIG. 17, a lower layer control information restoration unit 61, a downlink data channel restoration unit 62, an uplink data channel generation unit 63, an ACK/NACK resource determination unit 64 and an ACK/NACK generation unit 65 are illustrated.

The lower layer control information restoration unit 61 decodes and demodulates a lower layer control channel received from a base station apparatus and extracts control information. The control information includes uplink and downlink scheduling information, a packet number, a puncture pattern, ACK/NACK to PDSCHs and so on.

The downlink data channel restoration unit 62 extracts a downlink data channel in accordance with the downlink scheduling information and demodulates and decodes the extracted the downlink data channel for restoration.

The uplink data channel generation unit 63 generates an uplink data channel in accordance with an uplink scheduling grant. The uplink data channel generation unit 63 generates new or retransmission uplink data channels depending on retransmission control information (ACK/NACK) transmitted from the lower layer control information restoration unit 61.

The ACK/NACK resource determination unit 64 determines which resources are used to indicate the ACK/NACK. Resources used to transmit ACK/NACK to PDSCHs are determined based on to which CCEs in PDCCHs control information for the PDSCHs is mapped. Resources used to receive ACK/NACK to PUSCH are determined based on which resource blocks are used to transmit the PUSCHs. If codes for code multiplexing are indicated by a sequence number and a cyclic shift amount, these information items are also transmitted to the ACK/NACK resource determination unit 64.

The ACK/NACK generation unit 65 generates acknowledgement information (ACK or NACK) to the PUSCH.

The present invention may be applied to any appropriate mobile communication system for use in an area where systems having different retransmission periods coexist. For example, the present invention may be applied to a HSDPA/HSUPA based W-CDMA system, a LTE based system, an IMT-Advanced system, a WiMAX, a Wi-Fi based system and so on.

The present invention has been described with reference to the specific embodiments, but the embodiments are simply illustrative, and those skilled in the art will understand various variations, modifications, alterations and substitutions. In the above description, some specific numerical values are used for better understanding of the present invention. Unless specifically indicated, however, these numerical values are simply illustrative and any other suitable values may be used. In the above description, some specific formulae are used for better understanding of the present invention. Unless specifically indicated, however, these formulae are simply illustrative and any other suitable formulae may be used. Segmentation of the description is not essential to the present invention, and descriptions in two or more sections may be combined or concatenated as needed. For convenience of explanation, apparatuses according to the embodiments of the present invention have been described with reference to functional block diagrams, but these apparatuses may be implemented in hardware, software or combinations thereof. The present invention is not limited to the above embodiments, and variations, modifications, alterations and substitutions can be made by those skilled in the art without deviating from the spirit of the present invention.

This international patent application is based on Japanese Priority Application No. 2008-120659 filed on May 2, 2008, the entire contests of which are hereby incorporated by reference.

### LIST OF REFERENCE SYMBOLS

50: cell
100₁, 100₂, 100₃: user equipment
200: base station apparatus
300: upper node
400: core network
52: scheduler
53: lower layer control channel generation unit
54 : upper layer control information generation unit
55: broadcast information generation unit
56: downlink data channel generation unit
57: multiplexing unit
58: uplink control information extraction unit
61: lower layer control information restoration unit
62: downlink data channel restoration unit
63: uplink data channel generation unit
64: ACK/NACK resource determination unit
65: ACK/NACK generation unit

## Claims

1. A base station apparatus for mobile communication wherein the base station apparatus is used in an area where at least a first system and a second system having different packet retransmission intervals coexist, comprising:
a scheduling unit configured to schedule radio resources for user equipments in the first system and the second system;
a transmitting unit configured to transmit a downlink control channel and a downlink shared data channel; and
a receiving unit configured to receive an uplink control channel including acknowledgement information to the downlink shared data channel,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments, and
if a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the scheduling is performed such that the control information destined for the user equipment in the second system is associated with a control channel element different from the certain control channel element.

2. A base station apparatus for mobile communication wherein the base station apparatus is used in an area where at least a first system and a second system having different packet retransmission intervals coexist, comprising:
a scheduling unit configured to schedule radio resources for user equipments in the first system and the second system;
a transmitting unit configured to transmit a downlink control channel and a downlink shared data channel; and
a receiving unit configured to receive an uplink control channel including acknowledgement information to the downlink shared data channel,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments, and
the radio resources for the uplink control channels are provided to the first system and the second system separately.

3. A base station apparatus for mobile communication wherein the base station apparatus is used in an area where at least a first system and a second system having different packet retransmission intervals coexist, comprising:
a scheduling unit configured to schedule radio resources for user equipments in the first system and the second system;
a transmitting unit configured to transmit a downlink control channel and a downlink shared data channel; and
a receiving unit configured to receive an uplink control channel including acknowledgement information to the downlink shared data channel,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments,
and
if a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the control information destined for the user equipment in the second system is associated with the same control channel element as the control information destined for the user equipment in the first system but is spread with different spread codes.

4. The base station apparatus as claimed in claim 3, wherein a difference between the spread codes is specified in an offset amount of code numbers for specifying the spread codes.

5. A base station apparatus for mobile communication wherein the base station apparatus is used in an area where at least a first system and a second system having different packet retransmission intervals coexist, comprising:
a scheduling unit configured to schedule radio resources for user equipments in the first system and the second system;
a transmitting unit configured to transmit a downlink control channel; and
a receiving unit configured to receive an uplink shared data channel transmitted in scheduling information on the scheduling,
wherein
acknowledgement information to the uplink shared data channel is transmitted to a user equipment in the downlink control channel including the scheduling information or in the downlink control channel not including the scheduling information,
the acknowledgement information is transmitted in a shorter period in the second system than the first system,
radio resources for the uplink shared data channel are reserved for the first system and the second system separately,
the acknowledgment information transmitted to the user equipments is associated with different frequencies depending on which resource blocks the user equipments use to transmit the uplink shared data channel, and
if the acknowledgement information destined for a user equipment in the first system and the acknowledgement information destined for a user equipment in the second system are associated with the same frequency, the acknowledgement information destined for a user equipment in the first system and the acknowledgement information destined for a user equipment in the second system are spread with different spread codes.

6. The base station apparatus as claimed in claim 5, wherein a difference between the spread codes is specified in an offset amount of code numbers for specifying the spread codes.

7. A user equipment for mobile communication wherein the user equipment is used in an area where at least a first system and a second system having different packet retransmission intervals coexist, comprising;
a receiving unit configured to receive a downlink control channel and a downlink shared data channel; and
a transmitting unit configured to transmit an uplink control channel including acknowledgement information to the downlink shared data channel,
wherein
the downlink control channel includes multiple control channel elements, one or more of the control channel elements being associated with control information destined for the individual user equipments,
radio resources used for the uplink control channels are determined depending on which of the control channel elements correspond to the control information destined for the user equipments, and
the radio resources for the uplink control channels are provided to the first system and the second system separately.

8. A user equipment for mobile communication wherein the user equipment is used in an area where at least a first system and a second system having different packet retransmission intervals coexist, comprising;
a receiving unit configured to receive a downlink control channel and a downlink shared data channel; and
a transmitting unit configured to transmit an uplink control channel including acknowledgement information to the downlink shared data channel,
wherein
the downlink control channel includes multiple control channel elements, one or more of the control channel elements being associated with control information destined for the individual user equipments,
radio resources used for the uplink control channels are determined depending on which of the control channel elements correspond to the control information destined for the user equipments, and
if a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the control information destined for the user equipment in the second system is associated with the same control channel element as the control information destined for the user equipment in the first system but is spread with different spread codes.

9. The user equipment as claimed in claim 8, wherein a difference between the spread codes is specified in an offset amount of code numbers for specifying the spread codes.

10. A method for use in an area where at least a first system and a second system having different packet retransmission intervals coexist, comprising:
scheduling radio resources for user equipments in the first system and the second system at a base station apparatus;
transmitting a downlink control channel and a downlink shared data channel to the user equipments; and
receiving an uplink control channel including acknowledgement information to the downlink shared data channel at the base station apparatus,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments, and
if a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the scheduling is performed such that the control information destined for the user equipment in the second system is associated with a control channel element different from the certain control channel element.

11. A method for use in an area where at least a first system and a second system having different packet retransmission intervals coexist, comprising:
scheduling radio resources for user equipments in the first system and the second system at a base station apparatus;
transmitting a downlink control channel and a downlink shared data channel to the user equipments; and
receiving an uplink control channel including acknowledgement information to the downlink shared data channel at the base station apparatus,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments, and
the radio resources for the uplink control channels are provided to the first system and the second system separately.

12. A method for use in an area where at least a first system and a second system having different packet retransmission intervals coexist, comprising:
scheduling radio resources for user equipments in the first system and the second system at a base station apparatus;
transmitting a downlink control channel including scheduling information and a downlink shared data channel to the user equipments; and
receiving an uplink control channel including acknowledgement information to the downlink shared data channel at the base station apparatus,
wherein
the downlink control channel includes multiple control channel elements, one or more of the control channel elements being associated with control information destined for the individual user equipments,
radio resources used by the user equipments receiving the downlink shared data channel to transmit the uplink control channels are determined depending on which of the control channel elements correspond to the control information destined for the user equipments, and
if a downlink shared data channel in a certain subframe is assigned to a user equipment in the first system, the control information destined for the user equipment in the first system is assigned to a certain control channel element, and a downlink shared data channel in a subframe after a predefined time period from the certain subframe is assigned to a user equipment in the second system, then the control information destined for the user equipment in the second system is associated with the same control channel element as the control information destined for the user equipment in the first system but is spread with different spread codes.

13. A method for use in an area where at least a first system and a second system having different packet retransmission intervals coexist, comprising:
scheduling radio resources for user equipments in the first system and the second system at a base station apparatus;
transmitting a downlink control channel to the user equipments; and
receiving an uplink shared data channel transmitted in scheduling information on the scheduling at the base station apparatus,
wherein
acknowledgement information to the uplink shared data channel is transmitted to a user equipment in the downlink control channel including the scheduling information or in the downlink control channel not including the scheduling information,
the acknowledgement information is transmitted in a shorter period in the second system than the first system,
radio resources for the uplink shared data channel are reserved for the first system and the second system separately,
the acknowledgment information transmitted to the user equipments is associated with different frequencies depending on which resource blocks the user equipments use to transmit the uplink shared data channel, and
if the acknowledgement information destined for a user equipment in the first system and the acknowledgement information destined for a user equipment in the second system are associated with the same frequency, the acknowledgement information destined for a user equipment in the first system and the acknowledgement information destined for a user equipment in the second system are spread with different spread codes.
